# EUROPEAN PATENT APPLICATION

(11) **EP 4 790 740 A1**
(43) Date of publication of application: **12.08.2026**
(21) Application number: 25156673.3
(22) Date of filing: 07.02.2025
(51) Int. Cl.: H01J 49/00, G01N 30/86, G01N 30/72, G01N 30/88

(54) **A METHOD OF GENERATING AN INSTRUMENT METHOD FOR A MASS SPECTROMETER**

(71) Applicant: Thermo Fisher Scientific Brno s.r.o., 627 00 Brno (CZ)
(72) Inventor: JECH, Martin, 627 00 Brno (CZ)
(74) Representative: Boult Wade Tennant LLP

(57) **Abstract**

A method is provided of generating an instrument method for a mass spectrometer. There is also provided a compound optimisation results tool configured to generate an instrument method for a mass spectrometer. The method comprises obtaining one or more compound name associated with a sample to be analysed by the mass spectrometer using the instrument method. One or more cassette is generated using information obtained from prior compound optimisation. Each cassette comprises one or more compound name and one or more parameters associated with each compound name. For each cassette, one or more test parameters is selected. A cassette value of each test parameter is compared to a plurality of template instrument methods. The template instrument method is selected that has calibration values closest to the cassette values for the one or more test parameters.

## Description

### Field of the disclosure

The disclosure relates to the field of mass spectrometry. In particular, the disclosure may be relevant to Drug Metabolism and Pharmokinetic (DMPK) studies carried out on a liquid chromatography tandem mass spectrometer.

### Background

Mass spectrometers are used to analyse samples, giving information as to the composition, structure, or other properties of the sample. Mass spectrometers, for example, measure a mass-to-charge ratio of ions to provide a mass spectrum of the sample, which may be used to determine properties of the sample. A mass spectrum may be used, for example, to determine one or more of the masses of particles and molecules, the elemental composition of the sample, the isotopes present in the sample, the chemical structure of molecules present in the sample, and so on.

It is known to create mass spectrometer methods for particular compounds, such as instrument methods for optimisation, acquisition methods (also referred to as instrument methods) and data processing methods. Conventionally, compound optimisation may be carried out for each compound, at the time of the experiment, and the data from the compound optimisation may be used to manually create an instrument method and/or data processing method for the compound. The compound optimisation is repeated for each compound and experiment, and is typically specific to the hardware being used. In a particular example, the compound optimisation may include taking an infusion for each compound and running an optimisation, which may require using a substantial quantity of sample and may risk contamination if more than one compound optimisation is carried out in succession. In an event that experiments involve many compounds, manually creating a method for each compound can be time consuming. In an example, an operator running small molecule Drug Metabolism and Pharmokinetic (DMPK) studies or experiments may generate data for between 50 and 100 compounds in a week.

### Summary of the disclosure

Against this background, in a first aspect of the present disclosure there is provided: a method of generating an instrument method for a mass spectrometer, the method comprising:
a. obtaining one or more compound name associated with a sample to be analysed by the mass spectrometer using the instrument method;
b. generating one or more cassette using information obtained from prior compound optimisation, wherein each cassette comprises:
   one or more compound name; and
   one or more parameters associated with each compound name; and
   for each cassette:
      c. selecting one or more test parameters from the cassette;
      d. comparing a cassette value of each test parameter to a plurality of template instrument methods, wherein each template instrument method comprises calibration values of the one or more test parameters and one or more mass spectrometer parameters; and
      e. selecting the template instrument method having calibration values closest to the cassette values for the one or more test parameters.

In this way, a workflow for generating an instrument method for a mass spectrometer, such as an acquisition method, may be automated. The method reduces manual interactions and need for transcription, which in turn saves time and reduces errors, increasing productivity. The method may be useful in any scenario where a set of compounds is analysed using a mass spectrometer. For example, a DMPK study requires a novel set of compounds to be analysed on a frequent basis. Automating the generation of acquisition methods for multiple compounds saves a significant amount of time. The instrument method may be generated without need for importing or exporting either methods or compound optimisation information. The cassette may be generated from saved internal standards, and the instrument method may be selected from saved template instrument methods. The saved internal standards and/or template instrument methods may include historical data from the same or different mass spectrometers.

The one or more cassette may comprise more than one compound name, wherein the method may comprise repeating steps d) and e) for each compound name such that a cassette value that is associated with each compound is compared with calibration values of the template instrument methods.

In this way, a cassette may be generated comprising information for a set of compounds, allowing an instrument method to be generated for all of the compounds such that all of the compounds may be analysed in a single experiment.

The one or more cassette may be generated by searching a compound optimisation database for the one or more compound name.

The database may comprise historical compound optimisation data. The historical compound optimisation data may have been obtained on the same mass spectrometer or a different mass spectrometer.

Each template instrument method may comprise:
one or more parameter that is contained in a cassette; and
one or more mass spectrometer parameter.

In this way, values of the one or more parameter that is contained in both the template instrument method and the cassette may be compared.

Each template instrument method may comprise one or more of:
a source setting;
a collision gas setting; and
a cycle time.

Each template instrument method may comprise one or more liquid chromatography parameter, including one or more of:
a mobile phase channel; a flow rate;
a gradient;
a column selection; and
a column oven temperature.

Each cassette may comprise one or more of:
a precursor ion mass/charge ratio;
a product ion mass/charge ratio;
a lens value;
a collision energy;
a source fragmentation;
a compound name; and
a date.

The method may further comprise generating a data processing method, wherein generating the data processing method comprises comparing one or more parameter of the one or more cassette to a plurality of template data processing methods.

In this way, a data processing method may be automatically generated for the compound or set of compounds in the sample.

More than one template instrument method may be selected and the method may further comprise generating an acquisition sequence based on a template acquisition sequence.

In this way, a complete workflow may be generated to analyse a set of compounds, such that the operator needs only to input the compound names and, optionally, edit a vial position. All other parameters of the instrument method, data processing method and acquisition sequence may be generated automatically.

The method may further comprise compound re-optimisation, wherein for each cassette, between steps b) and c) the method further comprises:
selecting one or more compound for optimisation;
selecting one or more spectrometer parameter for optimisation;
acquiring signal data for a sample data using an instrument optimisation method; determining a peak in the signal data to identify an automatically determined optimal value of the selected parameter;
displaying the automatically determined optimal value of the selected parameter on a graphical plot of signal intensity against the selected parameter, wherein a user either
approves the automatically determined optimal value of the selected parameter or manually chooses a different optimal value of the selected parameter; and
updating the cassette with the optimal value of the selected parameter.

In this way, a parameter may be optimised using only a single injection of the sample. For example, a compound may be injected into a liquid chromatography column (such as an Ultra High Performance Liquid Chromatography (UHPLC) column). This allows for optimisation of compounds even when there is very little (by volume and/or by concentration) of the compound. An operator may visually check the optimisation, and either approve the optimisation or manually select a different optimal value of the parameter, allowing an operator to verify that the optimisation is accurate.

In a second aspect of the present disclosure there is also provided: a compound optimisation results tool configured to:
a. receive one or more compound name associated with a sample to be analysed by the mass spectrometer using the instrument method; and
b. generate one or more cassette using information obtained from prior compound optimisation, wherein each cassette comprises:
   one or more compound name; and
   one or more parameters associated with each compound name; and
   wherein for each cassette the compound optimisation results tool is further configured to:
      c. select one or more test parameters from the cassette;
      d. compare a cassette value of each test parameter to a plurality of template instrument methods, wherein each template instrument method comprises calibration values of the one or more test parameters and one or more mass spectrometer parameters; and
      e. select the template instrument method having calibration values closest to the cassette values for the one or more test parameters.

The compound optimisation results tool may automatically generate an instrument method for a compound or set of compounds, saving an operator time and reducing errors.

The compound optimisation results tool may be further configured to carry out any of the methods of the first aspect of the disclosure.

The compound optimisation results tool may further comprise a user interface configured to:
receive one or more compound name as an input; and
graphically display compound optimisation results.

There is also provided a mass spectrometer comprising the compound optimisation results tool of the second aspect of the present disclosure.

There is also provided a liquid chromatography tandem mass spectrometer comprising the compound optimisation results tool of the second aspect of the present disclosure.

### Brief description of the drawings

A specific embodiment of the disclosure will now be described, by way of example only, with reference to the accompanying drawings in which:
Figure 1 shows a flow chart illustrating a method of generating an instrument method for a mass spectrometer according to an embodiment of the present disclosure.
Figure 2 shows a flow chart illustrating a method of generating an instrument method for a mass spectrometer according to an embodiment of the present disclosure.
Figure 3 shows a flow chart illustrating a method of generating an instrument method and a data processing method for a mass spectrometer according to an embodiment of the present disclosure.
Figure 4 shows a flow chart illustrating a workflow using a method of generating an instrument method in accordance with an embodiment of the present disclosure.
Figure 5 shows a flow chart illustrating a workflow for compound optimisation to generate a cassette for use in a method of generating an instrument method in accordance with an embodiment of the present disclosure.

### Detailed description

In use of a spectrometer, such as a mass spectrometer, compound optimisation may take place. For a particular compound, properties of the compound may be recorded alongside values to be used for certain parameters of the mass spectrometer when analysing that compound. The compound optimisation may, for example, include any of a compound name, a precursor ion mass/charge ratio, a product ion mass/charge ratio, a lens value, a collision energy, a source fragmentation, a date, or other parameter associated with the compound or spectrometer.

Once a compound has been optimised, the data associated with the optimisation may be recorded and stored. For example, a compound optimisation report may be saved. In a particular example, the compound optimisation report may be saved as a .xml file type.

Once various compounds have been optimised and the compound optimisation reports created, the compound optimisation reports may be searched. An operator may input a compound name, or a list of compound names, and if a compound optimisation report exists for the input compound, the data associated with the compound optimisation report may be retrieved. The compound optimisation reports may be stored as separate files, or they may be combined into a data set. A stored data set may comprise data from a plurality of compound optimisation reports for a plurality of compounds. For each compound name, the stored data set may comprise an internal standard comprising the data from the compound optimisation report that was generated for that compound. The stored data set may be a database.

According to certain embodiments of the present disclosure, a method of generating an instrument method for a mass spectrometer comprises obtaining one or more compound names. In an example, obtaining the one or more compound names comprises inputting one or more compound names to a user interface or selecting one or more compound names from a list using a user interface. Stored data comprising data associated with compound optimisation reports is searched for the one or more compound names, wherein the stored data comprises a plurality of internal standards each linked with one of a plurality of compound names. In an event that the compound name is present in the stored data, the compound name is linked to the internal standard that is saved for that compound. The compound name and linked internal standard may be referred to as a cassette. The cassette may contain one compound name and linked internal standard, or more than one compound name and linked internal standard. As used herein, a cassette may comprise any compound name and linked internal standard. As a particular example, a cassette may comprise a group of compounds used in non-clinical studies to collect pharmacokinetic data from multiple drug candidates in a single experiment.

The method further comprises automatically generating an instrument method, based on the internal standard(s). Generating the cassette (including searching for the compound name(s), and linking the compound name(s) to the internal standard) and generating the instrument method(s) are carried out automatically. Generating the cassette(s) and generating the instrument method(s) may be carried out by a tool (such as a software tool), processor or device. The mass spectrometer may comprise the tool or processor, or the tool or processor may be separate to the mass spectrometer. A computer or other electronic device may comprise the tool or processor. The tool or processor may be referred to herein as a compound optimisation results (COR) tool.

Generating the instrument method comprises comparing one or more parameters of one or more cassette to a plurality of template instrument methods. In other words, one or more internal standard of the cassette(s) is compared to a plurality of template instrument methods. A template instrument method is selected that has one or more parameters with values that are the same as or similar to values of the same parameter(s) of the one or more cassette. One instrument method may be generated for each cassette. Or, one instrument method may be generated for more than one cassette.

The template instrument methods may be stored on the COR tool. In this way, no import or export of cassettes or methods is needed.

The template instrument method may contain parameters that are contained within the compound optimisation reports. Comparing an internal standard to a template instrument method may comprise choosing one or more parameter of the internal standard and comparing the value of each chosen parameter to the value of the same parameter of the template instrument method. The template instrument method may further contain one or more mass spectrometer parameters such as source settings, collision gas setting, cycle time, and so on. In certain embodiments, where the method is used for liquid chromatography with tandem mass spectrometry (LC-MS/MS), the template instrument may further comprise one or more liquid chromatography parameters such as mobile phase channels, flow rate, gradient, column selection, column oven temperature and so on.

In certain embodiments, the method further comprises generating a data processing method. The data processing method is generated by the COR tool. The data processing method may be based on a template data processing method. Generating the data processing method comprises comparing one or more parameters of the cassette to a plurality of template data processing methods. A template data processing method is selected that has one or more parameters with values that are the same as or similar to values of the same parameter(s) of the one or more cassette. In an example, the parameter that is compared may be a retention time.

In certain embodiments, the method further comprises generating an acquisition sequence based on a template acquisition sequence. The acquisition sequence comprises a file location for saving acquired data, the instrument method and data processing method. The acquisition sequence may further comprise information regarding blanks, bracket standard, quality controls, and unknown samples to be used in the experiment. The operator may only need to edit a vial position.

In a particular example, a plurality of compounds may be optimised on a tandem mass spectrometer such as a triple quadrupole mass spectrometer. In that example, a compound optimisation report may include parameters such as a precursor ion mass/charge ratio, a product ion mass/charge ratio, a lens value, a collision energy, a source fragmentation. However, it will be understood that the method of generating an instrument method may be used for other types of mass spectrometer.

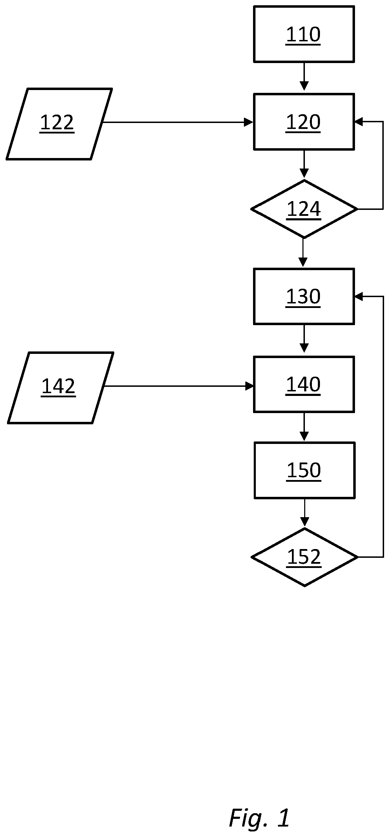

With reference to Figure 1, a method of generating an instrument method for a mass spectrometer is illustrated. At step 110, one or more compound name is obtained, wherein the one or more compound name is associated with a sample to be analysed by the mass spectrometer using the instrument method. At step 120, one or more cassette is generated using compound optimisation information 122 obtained from prior compound optimisation. As described above, the compound optimisation information 122 may be obtained by searching compound optimisation reports or by searching a database or other data set comprising data from compound optimisation reports. Each cassette comprises the compound name of one or more compounds and one or more parameters associated with each compound.

The information 122 obtained from prior compound optimisation may comprise data recorded during compound optimisation on the same mass spectrometer as the mass spectrometer for which the instrument method is being generated. The information 122 obtained from prior compound optimisation may, alternatively or in addition, comprise data recording during compound optimisation on a different mass spectrometer from the mass spectrometer for which the instrument method is being generated. The prior compound optimisation may occur immediately prior to generating the instrument method. For example, the prior optimisation may occur in the same session as generating the instrument method, and may optionally use the same sample for which the instrument method is generated. The prior compound optimisation may occur a period of time prior to generating the instrument method. For example, the prior compound optimisation may occur on a different date to generating the instrument method.

In certain embodiments, the instrument method may be generated for a tandem mass spectrometer such as a triple quadrupole mass spectrometer. The compound optimisation information used to generate the cassette may comprise selected reaction monitoring (SRM) information. In selected reaction monitoring, a sample is ionised to provide precursor ions. The precursor ions are separated by their mass/charge ratio, and precursor ions of a particular mass may be selected. The selected precursor ions undergo fragmentation to produce product ions. The product ions are separated by their mass/charge ratio, and product ions of a particular mass are selected for detection. The compound optimisation information may, therefore, include precursor ion mass/charge ratio and a product ion mass/charge ratio. The compound optimisation information may further include other parameters.

The compound optimisation information may contain other data from the optimisation process, such that the optimisation may be displayed graphically. For example, the compound optimisation information may contain signal intensities for a range of values of a particular parameter.

Generating the cassette may comprise opening or loading a previously created cassette, for example in an event that a cassette has previously been created for the compound name obtained at step 110. The previously created cassette may have been created at the same mass spectrometer as being used in the current iteration of the method. In an event that a cassette has not previously been created, generating the cassette may comprise automatically importing compound optimisation information from a database or other stored data, or manually selecting a compound name from a database or other stored data.

For each cassette, at step 130 one or more test parameters is selected from the cassette. At step 140 a cassette value of each test parameter is compared to a plurality of template instrument methods 142. Each template instrument method comprises calibration values of the one or more test parameters and one or more mass spectrometer parameters.

The template instrument methods may each be a .meth file type. The template instrument methods 142 comprise instrument parameters comprising mass spectrometer method parameters. The instrument parameters may further comprise other parameters such as liquid chromatography method parameters. The template instrument methods 142 further comprise all or some of the parameters found in compound optimisation reports, including the one or more test parameter to facilitate comparison of the cassette value of the test parameter to the calibration value of the test parameter. The template instrument methods 142 may comprise an SRM table, wherein the SRM table comprises values of parameters that would be found in a compound optimisation report.

At step 150, the method further comprises selecting the template instrument method having calibration values closest to the cassette values for the one or more test parameters. Where more than one test parameters are compared, an overall difference between calibration values and cassette values may be determined that takes into account each of the more than one test parameter. The more than one test parameters may be weighted the same or weighted differently.

In an event that there is more than one compound, step 120 may be repeated for each compound to generate a cassette for each compound. In an event that more than one cassette is generated, the method may comprise repeating steps 130 to 150 for each cassette. A separate instrument method may be generated for each cassette, or a single instrument method may be generated for more than one cassette.

In the example illustrated in Figure 1, in an event that at step 124 a cassette has been generated for every compound name obtained at step 110 (or in an event that only one compound name was obtained at step 110), the method proceeds to step 130. In an event that one or more compound name remains that was obtained at step 110 and for which a cassette has not yet been generated, step 120 is repeated until a cassette has been generated for every compound name that was obtained at step 110. In an event that at step 152 a template instrument method has been selected for every cassette (or in an event that only one compound name was generated at step 120), the method uses the selected template instrument method as the instrument method. In an event that one or more cassette remains that was obtained at step 120 and for which a template instrument method has not yet been selected, steps 130 to 150 are repeated until a template instrument method has been selected for every cassette. In an event that there is more than one cassette and a template instrument method is selected for each cassette, each template instrument method may form a different instrument method or the instrument method may combine the more than one template instrument method.

It will be understood that the repetition of steps shown in Figure 1 is exemplary, and that the steps may be repeated in a different manner. For example, in an event that there is more than one compound name at step 110, steps 120 to 150 may be carried out for the first compound name, then steps 120 to step 150 may be repeated for each compound. Similarly, the order of steps is exemplary. For example, step 130 may not need to be repeated for each cassette as the same test parameters may be used for each cassette. The one or more test parameters selected at step 130 may be pre-determined, such that step 130 is carried out prior to step 110.

The method of generating an instrument method may be automated. The operator may enter the compound names into a user interface, and steps 120 to 150 may then be carried out by a processor, tool or device. The mass spectrometer may comprise the processor or device, or the processor or device may be separate to the mass spectrometer. A COR tool may be configured to receive the compound names and to carry out steps 120 to 150.

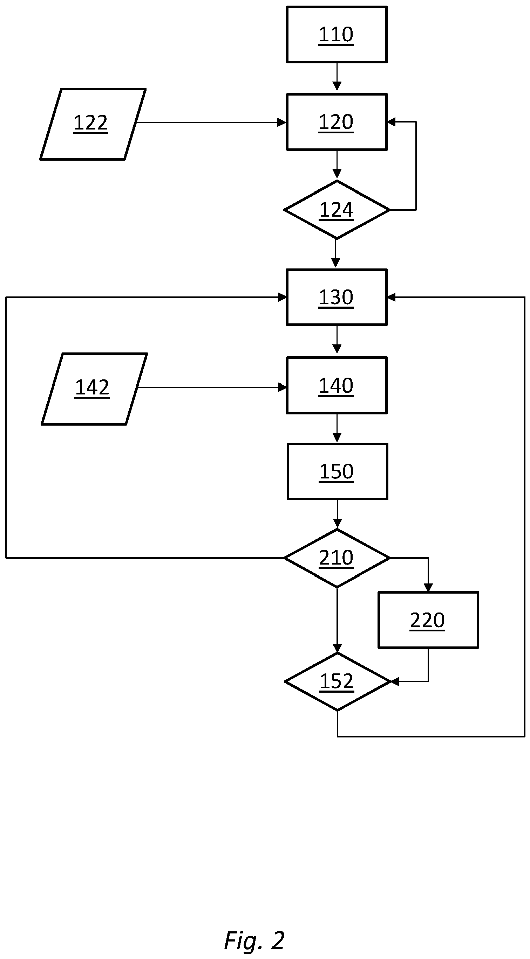

In certain embodiments, more than one instrument method may be generated for each cassette. For example, for instruments having column switching valves more than one instrument method may be generated for each cassette, to provide a method for each column or mobile phase selection. With reference to Figure 2, the method of generating an instrument method may further comprise repeating steps 120 to 150 for a given cassette if it is determined that more than one instrument method should be generated for that cassette. In an event that at step 210 it is determined that only one instrument method should be generated for the cassette, the method proceeds to step 152. In an event that at step 210 it is determined that more than one instrument method should be generated for the cassette, the method repeats steps 130 to 150 until all the instrument methods have been generated for that cassette. In an event that at step 210 it is determined that more than one instrument method should be generated for the cassette and in an event that all the instrument methods have been generated for that cassette, the method further comprises generating an acquisition sequence for the cassette at step 220, wherein the acquisition sequence is based on a sequence template. The sequence template may be pre-defined.

The method may further comprise generating a data processing method. Generating a data processing method may comprise using parameters defined in a template data processing method. The template data processing method may be selected by comparing one or more parameters of the cassette to a plurality of template data processing methods and selecting the template data processing method with the closest values to the cassette parameter(s). The selected template data processing method may comprise an appropriate scan filter to be used for the compound. The selected template data processing method may be linked to the internal standard of the cassette.

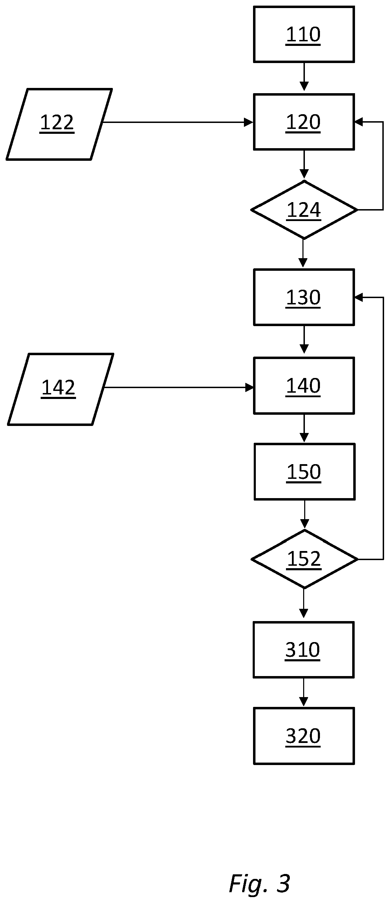

With reference to Figure 3, for each cassette at step 310 the method may further comprise comparing one or more test parameters of the cassette to template processing methods. The test parameters may be the same as or different to the test parameters used to select the instrument method. Each template processing method may comprise calibration values of one or more of the test parameters, such that comparing the one or more test parameters of the cassette to template processing methods comprises comparing a cassette value of each test parameter to the calibration value of the parameter in each template processing method. In certain embodiments, step 310 comprises comparing a value of a retention time of the cassette to a value of a retention time in each template processing method. At step 320, a template processing method may be selected based on the comparison of the one or more parameters of the cassette to template processing methods. Each template processing method may comprise one or more detection parameters. For example, each template processing method may comprise a peak detection parameters. Each template processing method may further comprise a detection algorithm, such as a peak detection algorithm. Each template processing method may comprise one or more calibration settings. For example, each template processing method may comprise one or more of calibration and quality control levels, units, linear regression, and so on. In certain embodiments, the template processing methods are .pmd file types.

As described above, the methods illustrated in any of Figures 1 to 3 may further comprise generating an acquisition sequence.

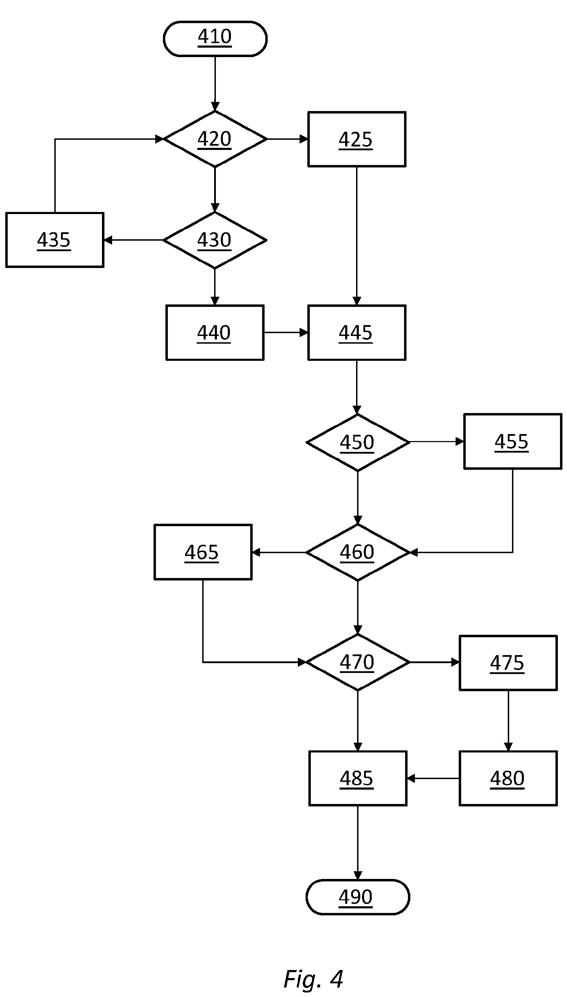

Figure 4 illustrates an example of a workflow using a method of generating an instrument method in accordance with an embodiment of the present disclosure. The illustrated workflow may be used, for example, in Drug Metabolism and Pharmokinetic (DMPK) studies or experiments. The illustrated workflow may be carried out using the COR tool.

At step 410, the workflow starts. At this stage, one or more compound names have been obtained. For example, the COR tool may have received the one or more compound names.

At step 420, it is determined whether a cassette, acquisition method (or instrument method) or compound database exists. In an event that an acquisition method exists, the workflow may not be required, or the workflow may skip to the step of deciding whether to create a data processing method. In an event that a cassette exists for the one or more compound names, step 425 comprises opening the cassette for each compound name. In an event that a compound database exists, step 425 comprises opening the compound database and compound optimisation information, such as SRM information, is imported. The COR tool may display compound optimisation graphically.

In an event that there is no cassette, acquisition method or compound database, the workflow proceeds to step 430, where it is determined whether the one or more compound has been previously optimised. If the one or more compound has not been previously optimised, the compound is optimised at step 435. This may be carried out by instrument control software. The compound optimisation may be added to a compound database, such that in a future iteration of the workflow the compound name and internal standard would be present in the database. The workflow then returns to step 420. If at step 430 it is determined that the one or more compound has been previously optimised, at step 440 the compound names may be manually selected from stored data such as a database of the COR tool, or a cassette workflow may be carried out to obtain compound optimisation data from a table. The database of the COR tool may, for example, be a local database of compound optimisations carried out on the mass spectrometer. The table may comprise the instrument database, or may be a collection of compound optimisations.

After the workflow has completed either step 425 or step 440, at step 445 a cassette is created for each compound using compound optimisation information such as SRM information. The cassette may comprise the compound name and the compound optimisation information. The COR tool may create the cassette.

At step 450 it is determined whether to create an acquisition method. If an acquisition method is to be created, at step 455 the workflow creates an acquisition method based on an instrument method template. The COR tool may create the acquisition method. In an event that there is more than one cassette, an acquisition method may be created for each cassette or the cassettes may be combined to provide a single acquisition method for all the cassettes. Step 455 may be repeated for each cassette. If more than one acquisition method is needed for a cassette, step 455 may be carried out more than once per cassette. For example, when carrying out liquid chromatography, an acquisition method may be created for each column or mobile phase selection. If an acquisition method already exists, no acquisition method may be created and the workflow may proceed to step 460 without carrying out step 455.

At step 460, it is determined whether to create a processing method (or data processing method). If a processing method is to be created, at step 465 the workflow creates a processing method based on a processing method template. The COR tool may create the processing method. In an event that there is more than one cassette, and processing method may be created for each cassette or the cassettes may be combined to provide a single processing method for all the cassettes. If a processing method already exists, no processing method may be created and the workflow may proceed to step 470 without carrying out step 465.

At step 470, it is determined whether to create an acquisition sequence for the one or more cassettes. An acquisition sequence may be used where multiple acquisition methods are used for a cassette. An acquisition sequence may comprise the acquisition method or methods, the processing method and a location for saving the results. If an acquisition sequence is to be created, at step 475 the workflow creates an acquisition sequence. The COR tool may create the acquisition sequence. At step 480, the operator may assign a vial position for each sample. If an acquisition sequence already exists, or if an acquisition sequence is not required, no acquisition sequence may be created and the workflow may proceed to step 485 without carrying out steps 475 and 480.

At step 485 data is acquired by running the acquisition method and data processing method. If an acquisition sequence was created, the data is acquired by running the acquisition method and data processing method in accordance with the acquisition method.

The workflow ends at step 490.

The one or more cassette created at step 445 may be created by any of the methods described herein. Similarly, creating the acquisition method at step 455 may be carried out by any of the methods for generating an instrument method described herein. Creating the processing method at step 465 may be carried out by any of the methods for generating a data processing method described herein.

After a cassette has been created, the method may further comprise re-optimising one or more parameters for one or more compounds. In the context of liquid chromatography tandem mass spectrometry (or gas chromatography), re-optimisation may be achieved by injecting a standard solution on column. Only one injection may be required to re-optimise a compound, or only one injection per parameter to be re-optimised may be required to re-optimise a compound.

A method of compound optimisation may comprise generating one or more cassettes according to any of the methods described herein. A compound may be selected for optimisation. A parameter may then be selected for optimisation. The selected parameter may be a parameter associated with spectrometer settings, for example. An instrument method for optimisation may be generated, and a sample may be analysed by using the mass spectrometer according to the instrument method for optimisation. The sample analysed may be a standard, or may be a sample for analysis. For LC-MS/MS, the sample may be injected on-column. The signal data is then analysed to determine an optimal value for the parameter. The analysis may be carried out automatically by a processor or tool, and may consider gradients and values of signal intensity to identify a peak of signal intensity. The signal data is displayed graphically to the operator, with the automatically determined optimal value of the parameter indicated. The operator may choose to accept the automatically determined optimal value of the parameter, or may manually select a different value of the parameter as the optimal value. The cassette is updated with the optimal value of the parameter. If desired, the method may be repeated for the same parameter to further optimise the parameter. The method may be repeated for other parameters and/or for other compounds. Using the updated cassette(s), an acquisition method is generated.

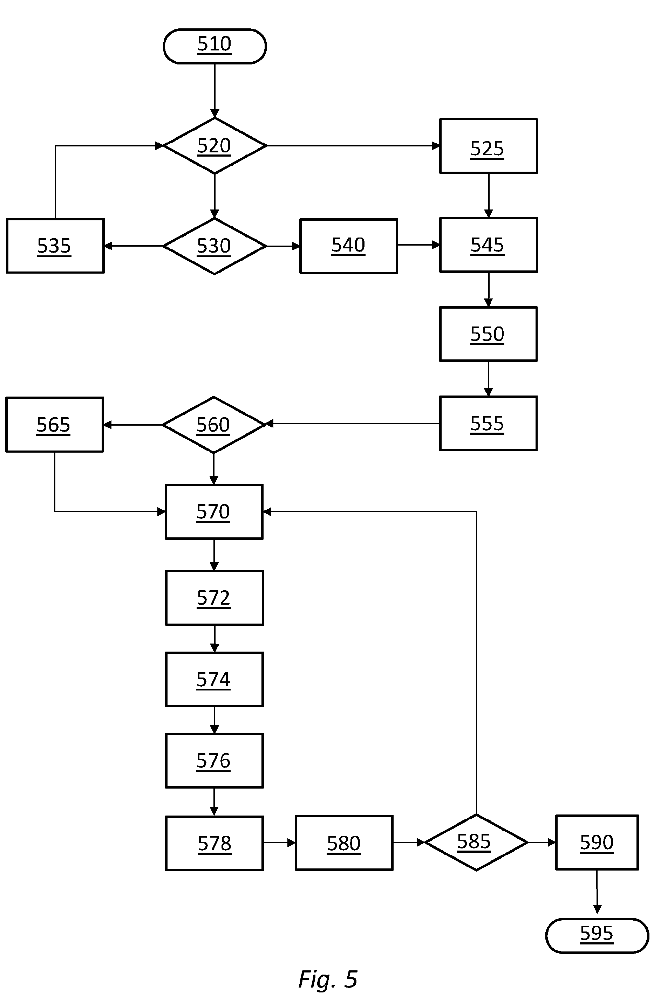

Figure 5 illustrates an example of a compound optimisation workflow. At step 510, the workflow starts. At this stage, one or more compound names have been obtained. The workflow may be carried out by a COR tool, wherein the COR tool has received the one or more compound name.

At step 520, it is determined whether a cassette, acquisition method (or instrument method) or compound database exists. In an event that an acquisition method exists, the workflow may not be required, or the workflow may skip to the step of deciding whether to create a data processing method. In an event that a cassette exists for the one or more compound names, step 525 comprises opening the cassette for each compound name. In an event that a compound database exists, step 525 comprises opening the compound database and compound optimisation information, such as SRM information, is imported.

In an event that there is no cassette, acquisition method or compound database, the workflow proceeds to step 530, where it is determined whether the one or more compound has been previously optimised. If the one or more compound has not been previously optimised, the compound is optimised at step 535. This may be carried out by instrument control software. The workflow then returns to step 520. If at step 530 it is determined that the one or more compound has been previously optimised, at step 540 the compound names may be manually selected from stored data such as a database of the COR tool, or a cassette workflow may be carried out to obtain compound optimisation data from a table. The database of the COR tool may, for example, be a local database of compound optimisations carried out on the instrument. The table may comprise the instrument database, or may be a collection of compound optimisations.

After the workflow has completed either step 525 or step 540, at step 545 a cassette is created for each compound using compound optimisation information such as SRM information. The cassette may comprise the compound name and the compound optimisation information.

At step 550, a re-optimisation step number and step size may be defined in the COR tool. This may be automated, or may be defined by an operator. At step 555, one or more compounds are selected to be re-optimised. An operator may carry out step 555 and select the compound or compounds, for example via an interface of the COR tool. Or, step 555 may be automated.

If, at step 560, a retention time should be determined, step 565 comprises scanning a plurality of standards for a standard having clearly defined chromatographic peaks. A standard may be signal data for a standard sample. The standard may have a .raw file format. If, at step 560, a retention time should be determined, the workflow may proceed to step 570 without carrying out step 565.

At step 570, a parameter to re-optimise is selected. The parameter may, for example, be a parameter associated with radio frequency (RF) spectrometry, capillary electrophoresis (CE) mass spectrometry, sector field (SF) mass spectrometry or high resolution accurate mass (HRAM) mass spectrometry (for example, using an orbitrap).

At step 572, the COR tool creates an instrument method for optimisation to optimise the selected parameter. The instrument method for optimisation may be created from a template.

At step 574, signal data is acquired from the sample using the instrument method for optimisation. For example, in the case of LC-MS/MS, a standard solution is injected on column following the instrument method for optimisation. A .raw file may be obtained containing the signal data. The signal data may be loaded to the COR tool at step 576, and the signal data is displayed graphically. An automatically determined optimal value is indicated on the graph. At step 578, an operator may approve the automatically determined optimal value, or manually select a different optimal value. For example, the automatically or manually selected optimal value may comprise a value of the parameter that corresponds to a peak of signal intensity.

At step 580, the cassette is updated with the optimised value of the parameter. If, at step 585, further optimisation of the parameter is wanted or if a new parameter is to be optimised, the workflow returns to step 570. Otherwise, an acquisition method is created with the optimised value of the parameter at step 590. The workflow ends at step 595.

Step 590 of creating an acquisition method may comprise any of the methods described herein for generating an instrument method. The optimised values of the cassette parameters may be compared to template instrument methods, and an appropriate template instrument method selected.

According to embodiments of the present disclosure, a compound optimisation results (COR) tool is provided, the COR tool being configured to carry out any of the methods described herein. The COR tool may comprise or be configured to receive information from a user interface, such that the COR tool may receive one or more compound names entered to the user interface by an operator.

A mass spectrometer may comprise the COR tool. Alternatively, the COR tool may be separate to the mass spectrometer but may be used in communication with the mass spectrometer to provide the instrument method to the mass spectrometer.

The methods have been described with reference to a liquid chromatography tandem mass spectrometer. It will be understood that the methods may be implemented for other types of mass spectrometer.

## Claims

1. A method of generating an instrument method for a mass spectrometer, the method comprising:
a. obtaining one or more compound name associated with a sample to be analysed by the mass spectrometer using the instrument method;
b. generating one or more cassette using information obtained from prior compound optimisation, wherein each cassette comprises:
one or more compound name; and
one or more parameters associated with each compound name; and for each cassette:
c. selecting one or more test parameters from the cassette;
d. comparing a cassette value of each test parameter to a plurality of template instrument methods, wherein each template instrument method comprises calibration values of the one or more test parameters and one or more mass spectrometer parameters; and
e. selecting the template instrument method having calibration values closest to the cassette values for the one or more test parameters.

2. The method of claim 1, wherein the one or more cassette comprises more than one compound name and wherein the method comprises repeating steps d) and e) for each compound name such that a cassette value that is associated with each compound is compared with calibration values of the template instrument methods.

3. The method of claim 1 or 2, wherein the one or more cassette is generated by searching a compound optimisation database for the one or more compound name.

4. The method of any preceding claim, wherein each template instrument method comprises:
one or more parameter that is contained in a cassette; and
one or more mass spectrometer parameter.

5. The method of claim 4 wherein each template instrument method comprises one or more of:
a source setting;
a collision gas setting; and
a cycle time.

6. The method of claim 4 or 5 wherein each template instrument method comprises one or more liquid chromatography parameter, including one or more of:
a mobile phase channel; a flow rate;
a gradient;
a column selection; and
a column oven temperature.

7. The method of any preceding claim wherein each cassette comprises one or more of:
a precursor ion mass/charge ratio;
a product ion mass/charge ratio;
a lens value;
a collision energy;
a source fragmentation;
a compound name; and
a date.

8. The method of any preceding claim further comprising generating a data processing method, wherein generating the data processing method comprises comparing one or more parameter of the one or more cassette to a plurality of template data processing methods.

9. The method of any preceding claim wherein more than one template instrument method is selected and further comprising generating an acquisition sequence based on a template acquisition sequence.

10. The method of any preceding claim further comprising compound re-optimisation, wherein for each cassette, between steps b) and c) the method further comprises:
selecting one or more compound for optimisation;
selecting one or more spectrometer parameter for optimisation;
acquiring signal data for a sample data using an instrument optimisation method;
determining a peak in the signal data to identify an automatically determined optimal value of the selected parameter;
displaying the automatically determined optimal value of the selected parameter on a graphical plot of signal intensity against the selected parameter, wherein a user either approves the automatically determined optimal value of the selected parameter or manually chooses a different optimal value of the selected parameter; and
updating the cassette with the optimal value of the selected parameter.

11. A compound optimisation results tool configured to:
a. receive one or more compound name associated with a sample to be analysed by the mass spectrometer using the instrument method; and
b. generate one or more cassette using information obtained from prior compound optimisation, wherein each cassette comprises:
one or more compound name; and
one or more parameters associated with each compound name; and wherein for each cassette the compound optimisation results tool is further configured to:
c. select one or more test parameters from the cassette;
d. compare a cassette value of each test parameter to a plurality of template instrument methods, wherein each template instrument method comprises calibration values of the one or more test parameters and one or more mass spectrometer parameters; and
e. select the template instrument method having calibration values closest to the cassette values for the one or more test parameters.

12. The compound optimisation results tool of claim 11, further configured to carry out the method of any of claims 2 to 10.

13. The compound optimisation results tool of claim 11 or 12, further comprising a user interface configured to:
receive one or more compound name as an input; and
graphically display compound optimisation results.

14. A mass spectrometer comprising the compound optimisation results tool of any of claims 11 to 13.

15. A liquid chromatography tandem mass spectrometer comprising the compound optimisation results tool of any of claims 11 to 13.
